# EUROPEAN PATENT SPECIFICATION

(11) **EP 3 844 365 B1**
(45) Date of publication and mention of the grant of the patent: **28.06.2023**
(21) Application number: 19782780.1
(22) Date of filing: 30.08.2019
(51) Int. Cl.: E06B 9/264, A01G 9/22, G02B 26/08, G02B 26/02

(54) **WINDOW ASSEMBLY INCLUDING SLATS**
FENSTERANORDNUNG MIT LAMELLEN
ENSEMBLE FENÊTRE COMPORTANT DES LAMES

(30) Priority: 30.08.2018 NL 2021524
(43) Date of publication of application: 07.07.2021
(73) Proprietor: Sunwaves B.V., 6825 MC Arnhem (NL)
(72) Inventor: RUITER, Jacobus Christiaan Gerardus Maria, 2725 NN Zoetermeer (NL)
(74) Representative: Nederlandsch Octrooibureau
(86) International application number: PCT/NL2019/050560
(87) International publication number: WO 2020/046128

(56) References cited:
- WO-A1-2008/041848
- WO-A1-2017/073864
- WO-A1-2018/052299
- WO-A1-2018/052300

## Description

### Technical field

The invention relates to a window assembly including slats disposed in between two layers. The invention further relates to an addable window assembly, and to a use of an assembly of slats.
Furthermore, the invention relates to a method for applying slats to a window and to a method for replacing slats in a window assembly.

### Background art

Windows with blinds or strips or slats disposed in between transparent layers are known in the art. Such windows can be used in many different situations: in roofs for greenhouses, regular glazing, advertising, light domes, atriums, conservatories, verandas, camper or caravan windows or special architecture. The slats can be tilted in order to control the amount of (solar) radiation passing through the windows, so as to regulate the temperature and light level in the space bound by the window.

WO 2008/041848 discloses a strip assembly, a strip system, an insulated glazing comprising a strip assembly, and a method for manufacturing a strip assembly. The strip assembly comprises a plurality of strips arranged in between a first and second substrate, each strip having one end thereof hingedly connected to the second substrate, a first electrode being spaced apart from the strips and configured for receiving an electrostatic charge for charging the first electrode, and a second electrode connected to the strips and configured for receiving an electrostatic charge for charging the strips.

The electrodes can enable an electrostatic attracting or repulsive force between the strips so as to control the orientation of the strips.

Although the described strip assembly is useful, it requires a complicated wiring of electrodes and is difficult to manufacture and to maintain.

It would be desirable to provide a window assembly which removes or reduces at least some of the inconveniences of the prior art.

### Summary of the invention

According to an aspect of the invention, according to claim 1, there is provided a window assembly with slats, comprising a first window, defining a surface; a first layer, conductive and adhered to a first side of the first window; an added window, connected to the first window at the first side, extending parallel to the first window; wherein a second layer is adhered to the added window, the second layer being conductive and adhered to a first side of the added window which faces the first layer; and wherein the first layer or the second layer comprises said slats which are conductive and movable between a first position in which the slats extend substantially parallel to the surface, and a second position in which the slats are oriented substantially perpendicular to the surface, and are positioned in between the first layer and the second layer; and wherein the first layer and the second layer are connectable to a voltage source for applying a voltage difference between the first layer and the second layer, such that the slats are movable; the added window assembly is releasably connected to the first window and/or the added window assembly is hingedly connected to the first window.

The window assembly according to the invention is very easy to manufacture compared to the prior art. The adhesive first and second layers can be prepared and manufactured in advance and can be quickly adhered to the first window and the added window. The assembly time at the location of the window is thus reduced to a minimum. Some known window assemblies require conductive coatings on the windows, which needs to be milled away at the edges to avoid electrical breakdowns. Since the window assembly of the present invention uses adhesive first and second layers, it does not require conductive coatings on the windows, such that milling away the coatings at the edges is not needed. This improvement thus saves time and resources.

Preferably, the first window and added window each predominantly comprise a transparent or translucent plate, which may be made of glass or plastic. The typical materials used for windows (i.e. window panes) will be known to a person skilled in the art. The first window preferably is an existing window which may be already mounted in a frame. It may be a single transparent layer, but it may also be a double or triple layer (i.e. double glazing or triple glazing). The transparency of the windows may relate to only a part of the electromagnetic spectrum from ultraviolet to far infrared. In particular, it may be transparent only for visible and IR radiation, or only for visible and UV radiation. The windows may alternatively be only transparent to a certain colour or certain colours. The first window and added window may be of the same transmittance, but this may also be different. In an embodiment, one of the first window and added window is a non-transparent plate, such that the window assembly can be used for blocking or reflecting thermal radiation.

The added window may have the same height and width as the first window. Alternatively, the added window may have a smaller height and/or a smaller width than the first window.

One of the first and second layers comprises slats. The slats have the shape of parallel strips. The slats may be partially cut from the respective layer (e.g. at one long side and two short, perpendicular side of each slat), or may be adhered to the remainder of this layer. The slats may be printed or patterned. The layer including the slats is conductive over its entire area. However, the side which is adhered to the first or added window may be insulating or conductive. Preferably, the layer comprising the slats is releasably adhered to the first window or the added window, such that it can be removed and/or replaced in one piece if needed. The slats are preferably connected to this layer in a hinging manner with a hinge edge at an upper side, such that the slats hang downwards due to gravity when no voltage is applied. When the window assembly is mounted in a tilted manner, the slats may be arranged at the upper one or at the lower one of the first window and added window. When they are arranged at the upper one of the first window and the added window, they hang downwards when no voltage is applied. When they are arranged at the lower one of the first window and the added window, they hang partially downwards while extending along and resting on the lower one of the first window and the added window when no voltage is applied. The planar, non-movable part of the layer which includes the slats may be flexible or inflexible. The slats themselves may be flexible too. In an embodiment, the slats are at a long side attached to a planar conductive layer, such that the slats and the planar conductive layer together form the first or second layer.

In this context, substantially parallel to the surface means a mutual angle of less than 5 degrees, preferably less than 2 degrees between the surface of the slat and the layer, measured at the hinge edge. Substantially perpendicular to the surface means a mutual angle of between about 85 and 90 degrees. The edge of the slats around which the slats hinge is preferably horizontal. Alternatively, this edge may be tilted with respect to a horizontal line, preferably under an angle of between 0 and 80 degrees.

One of the first and second layer does not comprise the slats. This layer is insulating at one side, and entirely conductive at the other side. This layer is adhered to the first window or the added window with the conductive side, which is provided with an adhering layer. This layer may be flexible. The first layer and the second layer - both the one with slats and the one without slats - may be flexible to improve their installation at the first window and the added window. 'Flexible' means that it can be bent without breaking. They may be supplied on a roll and/or cut to size. Their shape is preferably rectangular, but it may be any other shape, such as circular or polygonal. They may be applied to only part of the first window or added window.

Many different types of slats can be conceived. The slats may be blocking, reflecting or converting ultraviolet (UV), visible and infrared (IR) radiation, or they may selectively block, reflect or convert only a specific range of the electromagnetic spectrum, e.g. only UV or only IR. The slats may be very thin to allow them to move with respect to the first or second layer without a designated hinge (i.e. when the slats are flexible and hinge themselves). The thickness of the slats may be less than 20 micron, preferably between 5 and 10 micron, more preferably about 6 micron. Alternatively, the slats may be thicker or much thicker, e.g. about 25 micron, and hinges may be used to allow the slats to hinge or move relative to the first or second layer. The slats are conductive, preferably with a sheet resistance of between 10 - 100 MΩ (mega-ohm). The slats may be made conductive by means of deposition of a conductive thin film (e.g. vacuum, electrostatic or chemical deposition), lacquer or surface modification. When the slats are in their first position, i.e. when they extend along the surface, they may either overlap one another, or they may not overlap one another and leave a space in between them. Alternatively, the slats may (in their first position) just touch one another and form an uninterrupted surface together. The slats may have the same optical transmittance as the layer in which it is comprised, or it may have a different optical transmittance. The slats may be woven from cotton or polymer fibres, and after weaving enriched with a conductive coating. When the slats are flexible they may be slightly bended.

The voltage source is preferably a transformer which is connected to a mains voltage. The transformer converts the mains voltage to a designated voltage that is suited for the window assembly with slats. Alternatively, the voltage source may be a battery, which is preferably charged by means of renewable energy such as solar cells. The slats move on the basis of electrostatics, under applied voltages of typically 0-10 kV. The first layer and second layer may be arranged with first and second busbars which serve to connect them to the voltage source. Preferably, the components bearing the high voltage, such as slats, first and second layer, busbars and wires, are entirely enclosed by the windows or by the frame when the added window is in place, for safety reasons.

The space in between the first window and the added window does not need to be hermetically sealed from the external environment and may be at atmospheric pressure. This has the advantage that temperature in between the first window and the added window will be not much higher than the external environment. In this way the material requirements for the slats do not need to be very strict, e.g. because there is not a need to withstand extremely high temperatures.

The window assembly may be mounted such that its surface extends vertically. Alternatively, the window assembly may be mounted in a tilted manner, at an angle of between 5 degrees and 90 degrees with respect to the horizontal. The window and added window may be planar such that the surface is a planar surface. Alternatively, the window assembly may be bended or curved, in particular it may have the shape of a part of a cylinder surface.

The added window is releasably and/or hingedly connected to the first window.

Known window assemblies utilize a vacuum or low pressure in between the different windows, such as in a usual 'double glazing' assembly, because this prevents contamination or moisture in between the windows. This comes with the disadvantage that it is virtually impossible to reach the slats for maintenance (e.g. to repair a broken slat or electrode) or replacement (e.g. when different slats are desired). Furthermore, in known double glazing assemblies the space in between the windows may become extremely hot (up to 90 degrees Celsius), which severely limits the design freedom of the slats and electrodes.

Being able to release the added window from the first window allows for easy access to the space in between, and thus to the slats, and allows for easy maintenance, replacement and/or removal of the slats. This set-up does not require to replace the entire window assembly. Replacement of slats is useful when slats are broken, or when slats with different optical transmittance are required, for example in a greenhouse, when different crops or flowers are to be grown, or in advertising when a different visual appearance is desired. In this way costs are reduced.

In this context, a releasably connected window refers to a window being connected while it is possible to be released without damaging anything. In other words, the added window is adapted to be released from the first window, and comprises provisions to separate the two. These provisions may be any type of hinges, allowing the added window to pivot away from the first window. Alternatively, the provisions may be fastening material such as bolt-nut connections. A person skilled in the art will understand that there are many mechanical alternatives which allow for a strong connection which can be regularly disconnected. The provisions are specifically designed to release the added window from the first window on a regular basis.

In an embodiment, the voltage difference is variable between 0 V and a maximum voltage, enabling intermediate positioning of the slats. In this way, also orientations in between parallel and perpendicular are possible; the slats can be oriented at any angle in between the two extremes. The maximum voltage may be at least 1 kV, preferably at least 5 kV, more preferably about 10 kV.

In an embodiment, the first layer or the second layer, whichever is opposite to the slats, is provided with an insulating sublayer covering a surface facing the slats. The insulating sublayer has the advantage that sparks or voltage breakdowns are avoided.

Again, the added window is releasably and/or hingedly connected to the first window.

Using hinges the added window can be released from the first window, such that their first (inner) sides can be approached. Hinges allow for an easy and non-damaging release of the added window, which allows the slats to be replaced/maintained on a regular basis when the added window is in a position that allows access to the slats. The added window may be inflexible.

In an embodiment, the window assembly further comprises a functional layer, for instance a PDLC (Polymer Dispersed Liquid Crystal) layer or a ferro-electric layer.

The functional layer is adapted to actively modify the light going through. The functional layer may be adapted to only modify a specific part of the electromagnetic spectrum, e.g. only IR, visible or UV radiation.

In an embodiment, the functional layer is provided between the first window and the first layer, and the window assembly is further provided with an extra functional layer, for instance a PDLC layer or a ferro-electric layer, wherein the extra functional layer is provided between the added window and the second layer.

In an embodiment, the functional layer is provided between the first window and the first layer or between the added window and the second layer.

In an embodiment, the functional layer is a PDLC layer, which is at both lateral sides provided with electrodes for exerting an electric field across the PDLC layer, wherein the electric field is adapted to shift an optical transmittance of the PDLC layer between transparent and opaque. When no voltage is applied, the PDLC layer is typically opaque.

The shifting from transparent to opaque may be gradual. The electric field may be applied by DC voltage. However, also AC voltage may be suitable, depending on manufacturer specifications.

In an embodiment, the voltage source is provided on the first window or on the added window. This has the advantage that the windows together form a complete assembly which can operate independently. Alternatively, the voltage source is provided externally.

In an embodiment, the slats are adapted to entirely or partially block, reflect or convert at least one of visible light, infrared radiation and ultraviolet radiation.

According to an aspect of the invention, according to claim 10 and in accordance with the advantages and effects described herein, there is provided an addable window assembly, comprising an addable window and a second layer, adapted for application in a window assembly, preferably as described herein, wherein the second layer is conductive and adhered to the addable window, and wherein the addable window comprises slats which are conductive and movable between a first position in which the slats extend substantially parallel to the addable window, and a second position in which the slats are oriented substantially perpendicular to the addable window, wherein the addable window is releasably connectable to the first window and/or wherein the addable window is hingedly connectable to the first window.

According to an aspect of the invention, according to claim 11 and in accordance with the advantages and effects described herein, there is provided a use of an assembly of conductive slats provided with an adhesive second layer, in a window assembly, as described herein.

According to an aspect of the invention, according to claim 12 and in accordance with the advantages and effects described herein, there is provided a method for applying slats to a window, comprising the steps of
- providing a first window provided with a conductive first layer at a first side of the first window, and providing an addable window provided with a conductive second layer at a first side of the addable window, wherein the first layer or the second layer is provided with slats which are conductive and are, as a result of the voltage difference, movable between a first position wherein the slats substantially extend in a surface, and a second position wherein the slats are oriented substantially perpendicular to the surface, and are positioned in between the first layer and the second layer;
- placing the addable window parallel to the first window, wherein the first side of the addable window faces the first side of the first window, wherein the added window is releasably connected to the first window and/or wherein the added window is hingedly connected to the first window;
- connecting the first layer and the second layer to a voltage source for regulating a voltage difference between the first and the second layer.

In an embodiment, the method for applying slats to a first window further comprises, prior to the already described steps, the following steps:
- providing the first window;
- applying the first layer to the first side of the first window;
- providing the addable window;
- applying the second layer to the first side of the addable window.

According to an aspect of the invention, according to claim 14 and in accordance with the advantages and effects described herein, there is provided a method for replacing slats in a window assembly, preferably as described herein, comprising the steps of:
- releasing and removing the added window;
- removing the first or second layer, whichever is provided with the slats;
- applying a new first layer to the first window or a new second layer to the added window, wherein the new first layer or the new second layer comprises slats;
- replacing the added window in its original position.

In this method replacing the slats requires replacing only the layer provided with slats. The layer without the slats can thus stay in place. In an embodiment, the surface is a planar surface.

In an embodiment, there is provided a window assembly with slats, comprising a first window, defining a surface; a first layer, conductive and adhered to a first side of the first window; an added window, connected to the first window at the first side, extending parallel to the first window; wherein a second layer is adhered to the added window, the second layer being conductive and adhered to a first side of the added window which faces the first layer; and wherein the first layer or the second layer comprises slats which are conductive and movable between a first position in which the slats extend substantially parallel to the surface, and a second position in which the slats are oriented substantially perpendicular to the surface, and are positioned in between the first layer and the second layer; and wherein the first layer and the second layer are connectable to a voltage source for applying a variable voltage difference between the first layer and the second layer, such that the slats are movable; and wherein the window assembly further comprises at least one functional layer, for instance a PDLC layer or a ferro-electric layer, wherein the functional layer is provided between the first window and the first layer and/or between the added window and the second layer.

The various aspects discussed in this patent can be combined in order to provide additional advantages.

### Brief description of drawings

Embodiments will now be described, by way of example only, with reference to the accompanying schematic drawings in which corresponding reference symbols indicate corresponding parts.
Figure 1 shows a partial cross-section of a window assembly including frame according to an embodiment.
Figure 2a shows a partial cross-section of a window assembly according to an embodiment;
Figure 2b shows a partial cross-section of a window assembly according to an alternative embodiment;
Figure 3a-b show partial cross-sections of window assemblies with a functional layer according to embodiments;
Figure 4a-b show partial cross-sections of window assemblies with a functional layer according to embodiments;
Figure 5 shows a partial cross-section of a window assembly with two functional layers according to an embodiment;
Figure 6 shows a partial cross-section of a window assembly with two functional layers according to an embodiment.

The figures are meant for illustrative purposes only, and do not serve as restriction of the scope or the protection as laid down by the claims.

### Detailed description

Further advantages, features and details of the present invention will be explained in the following description of some embodiments thereof. In the description, reference is made to the attached figures.

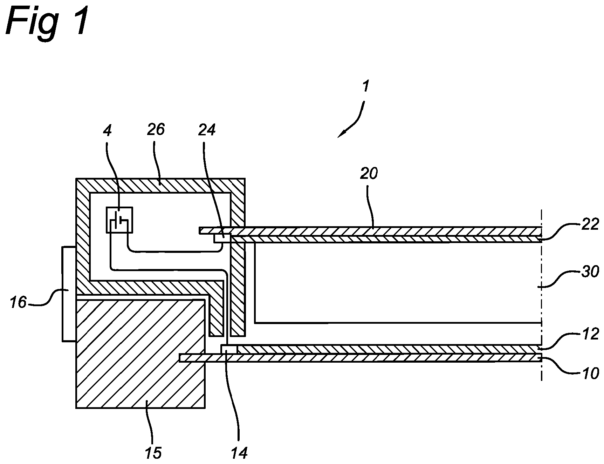

Figure 1 schematically shows a part of a cross-section (top view) of a window assembly 1 according to the invention. The window assembly 1 comprises a first window 10, which is formed by a transparent layer mounted in a first frame 15. On the first window 10, a conductive first layer 12 is applied. A first busbar 14 is conductively connected to the first layer 12. The window assembly 1 further comprises an added window 20, which is mounted in a second frame 26. A second layer 22 is adhered to the added window 20. The second layer 22 is conductive and comprises slats 30 which are conductive too. A second busbar 24 is conductively connected to the second layer 22 including the slats 30. The first and second busbar 14, 24 are connected to a voltage source 4 which is provided inside the second frame 26. Alternatively, the voltage source may be provided in the first frame 15. Preferably, the high-voltage wiring is provided at the inside of the window assembly 1 and difficult to access for a user while the added window 20 is in place, for safety reasons. A fastening member 16, such as an adhesive strip, connects the first frame 15 to the second frame 26 to position the added window 20 parallel the first window 10. Alternatively, bolt-nut connections or hinges may be used.

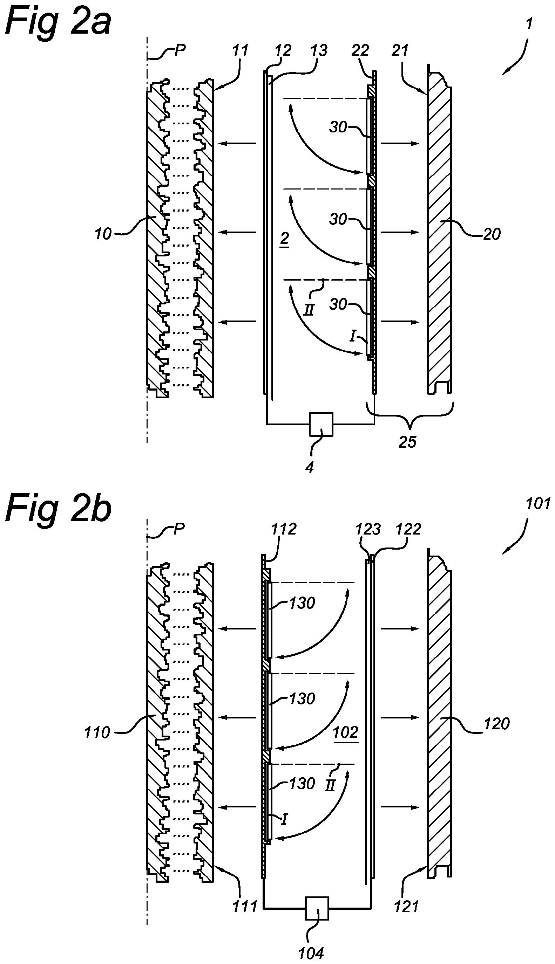

Figure 2a shows a part of a cross-section (side view) of a window assembly 1 according to an embodiment. The window assembly 1 comprises a first window 10, which is an existing window and in this case double glass, extending parallel to a planar surface P. At the first side 11 of the first window 10, a first layer 12 is applied. The first layer 12 is conductive; it however has a surface, facing away from the first side 11, which is insulating. This may be due to a surface treatment of the conductive first layer 12, but it may also be the case that the first layer 12 comprises a conducting sublayer and an insulating sublayer 13 covering the conducting sublayer, facing away from the first side 11 of the first window 10. The first layer 12 is adhered onto the first side 11 of the first window.

The window assembly 1 further comprises an added window 20, which is a glass or plastic plate and on which a conductive second layer 22 is adhered. Together, the added window 20 and second layer 22 may be referred to as added window assembly 25. The second layer 22 comprises slats 30, which are parallel strips, at one lateral side connected to the surface part of the second layer 22, such that they can pivot between a first position I in which the slats are parallel to the surface P and a second position II in which they are perpendicular to the surface P. The second layer 22 is facing the first window 10.

In order to build an electrostatic field between the first layer 12 and the slats 30, the conductive side of the first layer 12 and the second layer 22 are connected to opposite polarities of a voltage source 4, which is schematically drawn in the figure. Electrostatic forces between the first layer 12 and the slats 30 allow the slats 30 to move depending on the voltage applied with the voltage source 4. The space 2 between the first layer 12 and the second layer 22, in which the slats 30 can move, may be at atmospheric pressure.

Figure 2b shows a part of a cross-section of an alternative window assembly 101 according to an embodiment. The window assembly 101 is roughly similar to the window assembly 1 of Figure 2a: it comprises a first window 110 of double glass, defining a surface P. At a first side 111 of the first window 110 a conductive first layer 112 is applied. Other than in Figure 2a, here the first layer 112 comprises slats 130 which are parallel strips, pivotable between a first position I in which the slats are parallel to the surface P and a second position II in which they are perpendicular to the surface P.

The window assembly 101 further comprises an added window 120, at its first side 121 provided with a conductive second layer 122, comprising an insulating sublayer 123 facing away from the first side 121. A voltage source 104 is used to build an electric field between the first layer 112 and the second layer 122. The space 102 between the first layer 112 and the second layer 122, in which the slats 130 can move, may be at atmospheric pressure.

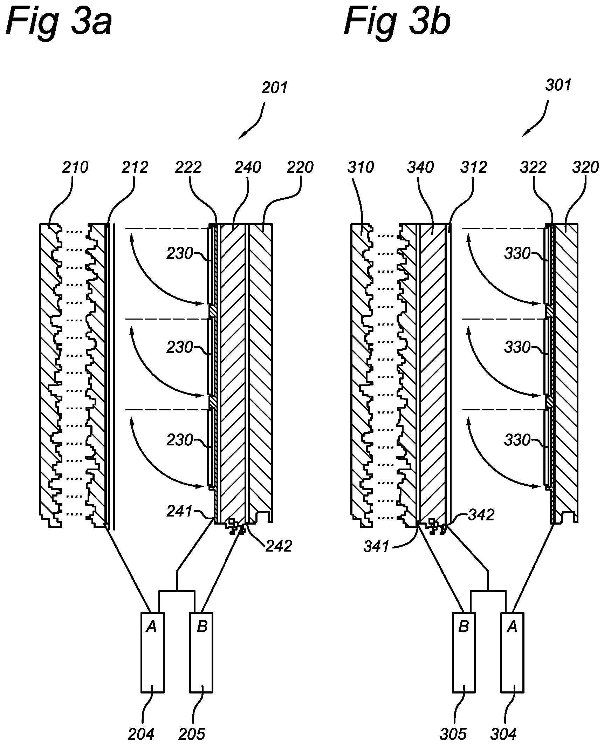

Figures 3a-b show parts of cross-sections of alternative window assemblies 201, 301 according to embodiments. Figure 3a shows a window assembly 201 similar to the window assembly 1 in Figure 2a, including a first window 210, an added window 220, a first layer 212, and a second layer 222 including slats 230. In between the second layer 222 and the added window 220, a functional layer 240 is provided, in this case a PDLC layer 240. The PDLC layer 240 is provided with electrodes 241, 242 which are intended to exert an electric field across the PDLC layer 240. In this case, the conductive sublayer 241 of the second layer 222 coincides with the electrode 241 at one side of the PDLC layer 240. The presence of the PDLC layer 240 allows for additional options for controlling the transmission of light through the window assembly 201. Separate voltage sources 204, 205 with switches allow for controlling the slats 230 and the PDLC layer 240, respectively. The first voltage source 204 serves to build an electric field between the first and second layers 212, 222 such that the movement of the slats 230 is controlled. The positive electrode of the first voltage source 204 coincides with the positive electrode of the second voltage source 205 leading to the electrode 241 at one side of the PDLC layer 240. Alternatively, the negative electrodes coincide. A voltage divider may be used as an alternative to the present configuration.

Figure 3b shows a similar window assembly 301. Only difference is that the PDLC layer 340 is now provided in between the first window 310 and the first layer 312, i.e. opposite to the added window 320 with the second layer 322 including the slats 330. Again, electrodes 341, 342 are provided with the PDLC layer 340 at either side. One electrode 342 now coincides with the conductive sublayer 342 of the first layer 312. Separate voltage sources 304, 305 with switches allow for controlling the slats 330 and the PDLC layer 340, respectively. The voltage sources 304, 305 are positioned in a similar manner as described in Figure 3a.

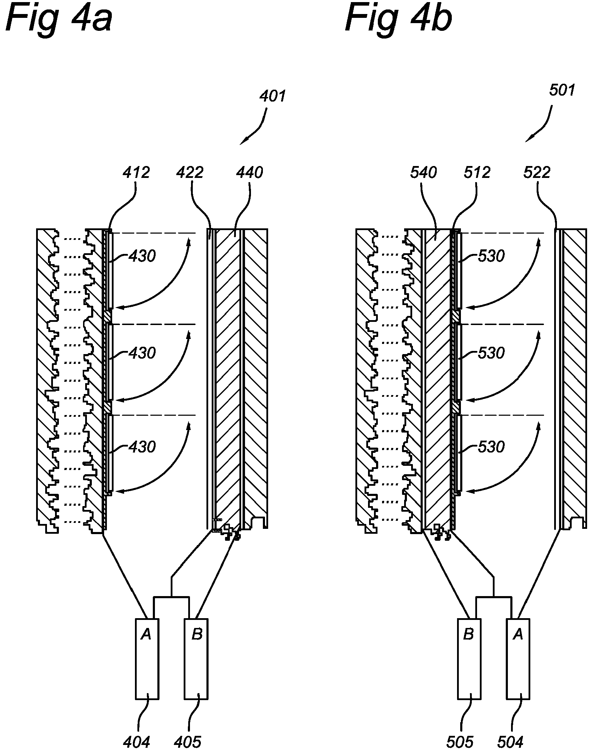

Figures 4a-b schematically shows cross-sections of window assemblies 401, 501 with PDLC layers 440, 540, which are equivalent to those shown in Figures 3a-b, but now the slats 430, 530 are provided in the first layers 412, 512, rather than in the second layers 422, 522. The person skilled in the art will understand that the various features shown in Figures 4a-b and their advantages correspond to those in Figures 3a-b.

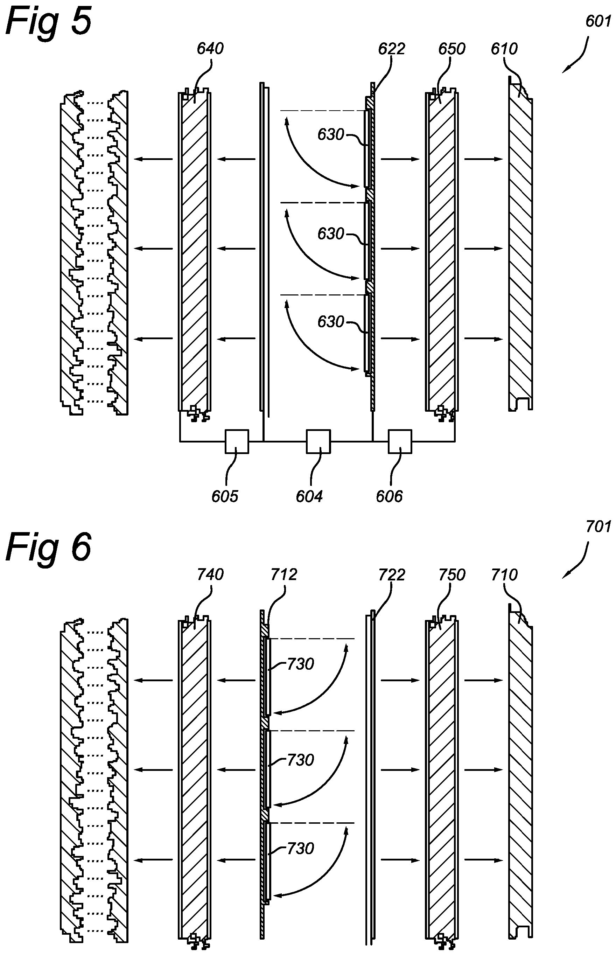

Figure 5 shows a window assembly 601 which is very similar to the one shown in Figure 3b, but now an extra functional layer 650 is added to the assembly 601. The extra functional layer 650 is provided in between the second layer 622 and the added window 610. Both functional layers 640, 650 can be controlled independently. The functional layers 640, 650 may be identical. Alternatively, they may have a different spectral response, or they may be functional layers of a different type. Voltage sources 604, 605, 606 allow for the control of the functional layers 640, 650 and the slats 630.

Figure 6 shows a similar window assembly 701 as those in Figure 5, but now the slats 730 are provided in the first layer 712 rather than in the second layer 722. Apart from that, the same features are present and the same advantages apply.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description.

## Claims

1. A window assembly (1) with slats (30), comprising
- a first window (10), defining a surface (P);
- a first layer (12), conductive and adhered to a first side (11) of the first window (10);
- an added window (20), connected to the first window (10) at the first side (11), extending parallel to the first window (10);
wherein a second layer (22) is adhered to the added window (20), the second layer being conductive and adhered to a first side (21) of the added window (20) which faces the first layer (12);
and wherein either the first layer (12) or the second layer (22) comprises said slats (30) which are conductive and movable between a first position (I) in which the slats (30) extend substantially parallel to the surface (P), and a second position (II) in which the slats (30) are oriented substantially perpendicular to the surface (P), and are positioned in between the first layer (12) and the second layer (22);
and wherein the first layer (12) and the second layer (22) are connectable to a voltage source (4) for applying a voltage difference between the first layer (21) and the second layer (22), such that the slats (30) are movable; and
wherein the added window (20) is releasably connected to the first window (10) and/or wherein the added window (20) is hingedly connected to the first window (10).

2. The window assembly (1) according to claim 1, wherein the voltage difference is variable.

3. The window assembly (1) according to claim 1, or 2, wherein the first layer (12) or the second layer (22), whichever is opposite to the slats (30), is provided with an insulating sublayer (13) covering a surface facing the slats (30).

4. The window assembly (1) according to any one of the preceding claims, further comprising a functional layer (40), for instance a PDLC layer or a ferro-electric layer.

5. The window assembly (1) according to claim 4, wherein the functional layer (40) is provided between the first window (10) and the first layer (12), and wherein the window assembly (1) is further provided with an extra functional layer (50), for instance a PDLC layer or a ferro-electric layer, wherein the extra functional layer is provided between the added window (20) and the second layer (22).

6. The window assembly (1) according to claim 4, wherein the functional layer (40) is provided between the first window (10) and the first layer (12) or between the added window (20) and the second layer (22).

7. The window assembly (1) according to any one of claims 4-6, wherein the functional layer (40) is a PDLC layer (240), which is at both lateral sides provided with electrodes (241, 242) for exerting an electric field across the PDLC layer (240), wherein the electric field is adapted to shift an optical transmittance of the PDLC layer (240) between transparent and opaque.

8. The window assembly (1) according to any one of the preceding claims, wherein the voltage source (2) is provided in a frame (15) of the first window (10) or in a frame (26) of the added window (20).

9. The window assembly (1) according to any one of the preceding claims, wherein the slats (30) are adapted to entirely or partially block, reflect or convert at least one of visible light, infrared radiation and ultraviolet radiation.

10. Addable window assembly (25), comprising an addable window (20) and a second layer (22), adapted for application in the window assembly (1) according to any one of claims 1-9, wherein the second layer (22) is conductive and adhered to the addable window (20), and wherein the addable window (20) comprises slats (30) which are conductive and movable between a first position (I) in which the slats (30) extend substantially parallel to the addable window (20), and a second position (II) in which the slats are oriented substantially perpendicular to the addable window (20),
**characterised in that** the addable window (20) is releasably connectable to the first window (10) and/or in that the addable window (20) is hingedly connectable to the first window (10).

11. Use of an assembly of conductive slats (30) provided with an adhesive second layer (22), in the window assembly (1) according to any one of claims 1-9.

12. Method for applying slats (30) to a window (10, 20), comprising the steps of
- providing a first window (10) provided with a conductive first layer (12) at a first side (11) of the first window (10), and providing an addable window (20) provided with a conductive second layer (22) at a first side (21) of the addable window (20),
wherein the first layer (12) or the second layer (22) is provided with slats (30) which are conductive and are, as a result of voltage difference, movable between a first position (I) wherein the slats (30) substantially extend along a surface (P), and a second position (II) wherein the slats (30) are oriented substantially perpendicular to the surface (P), and are positioned in between the first layer (12) and the second layer (22);
- placing the addable window (20) parallel to the first window (10), wherein the first side (21) of the addable window (20) faces the first side (11) of the first window (10), wherein the added window (20) is releasably connected to the first window (10) and/or wherein the added window (20) is hingedly connected to the first window (10);
- connecting the first layer (12) and the second layer (22) to a voltage source (4) for regulating a voltage difference between the first and the second layer (12, 22).

13. Method for applying slats (30) to a first window (10) according to claim 12, further comprising, prior to the steps of claim 12, the following steps:
- providing the first window (10);
- applying the first layer (12) to the first side (11) of the first window (10);
- providing the addable window (20);
- applying the second layer (22) to the first side (21) of the addable window (20).

14. Method for replacing slats (30) in a window assembly (1) according to any one of claims 1-9, comprising the steps of:
- releasing and removing the added window (20);
- removing the first or second layer (12, 22), whichever is provided with the slats (30);
- applying a new first layer to the first window (10) or a new second layer to the added window (20), wherein the new first layer or the new second layer comprises slats (30);
- replacing the added window (20) in its original position.

## Patentansprüche

1. Fensteranordnung (1) mit Lamellen (30), die Folgendes umfasst
- ein erstes Fenster (10), das eine Oberfläche (P) definiert;
- eine erste Schicht (12), die leitfähig ist und an einer ersten Seite (11) des ersten Fensters (10 haftet;
- ein hinzugefügtes Fenster (20), das mit dem ersten Fenster (10) an der ersten Seite (11) verbunden ist und sich parallel zu dem ersten Fenster (10) erstreckt;
wobei eine zweite Schicht (22) an dem hinzugefügten Fenster (20) haftet, wobei die zweite Schicht leitfähig ist und an einer ersten Seite (21) des hinzugefügten Fensters (20) haftet, die der ersten Schicht (12) zugewandt ist;
und wobei entweder die erste Schicht (12) oder die zweite Schicht (22) die besagten Lamellen (30) umfasst, die leitfähig sind und zwischen einer ersten Position (I), in der sich die Lamellen (30) im Wesentlichen parallel zu der Oberfläche (P) erstrecken, und einer zweiten Position (II) beweglich sind, in der die Lamellen (30) im Wesentlichen senkrecht zu der Oberfläche (P) ausgerichtet sind, und zwischen der ersten Schicht (12) und der zweiten Schicht (22) positioniert sind;
und wobei die erste Schicht (12) und die zweite Schicht (22) mit einer Spannungsquelle (4) verbunden werden können, um eine Spannungsdifferenz zwischen der ersten Schicht (21) und der zweiten Schicht (22) anzulegen, so dass die Lamellen (30) beweglich sind; und
wobei das hinzugefügte Fenster (20) lösbar mit dem ersten Fenster (10) verbunden ist und/oder wobei das hinzugefügte Fenster (20) gelenkig mit dem ersten Fenster (10) verbunden ist.

2. Fensteranordnung (1) nach Anspruch 1, wobei die Spannungsdifferenz variabel ist.

3. Fensteranordnung (1) nach Anspruch 1 oder 2, wobei die erste Schicht (12) oder die zweite Schicht (22), je nachdem, welche den Lamellen (30) gegenüberliegt, mit einer isolierenden Unterschicht (13) versehen ist, die eine den Lamellen (30) zugewandte Oberfläche bedeckt.

4. Fensteranordnung (1) nach einem der vorherigen Ansprüche, die ferner eine Funktionsschicht (40) umfasst, beispielsweise eine PDLC-Schicht oder eine ferroelektrische Schicht.

5. Fensteranordnung (1) nach Anspruch 4, wobei die Funktionsschicht (40) zwischen dem ersten Fenster (10) und der ersten Schicht (12) vorgesehen ist und wobei die Fensteranordnung (1) ferner mit einer zusätzlichen Funktionsschicht (50) versehen ist, beispielsweise einer PDLC-Schicht oder einer ferroelektrischen Schicht, wobei die zusätzliche Funktionsschicht zwischen dem hinzugefügten Fenster (20) und der zweiten Schicht (22) vorgesehen ist.

6. Fensteranordnung (1) nach Anspruch 4, wobei die Funktionsschicht (40) zwischen dem ersten Fenster (10) und der ersten Schicht (12) oder zwischen dem hinzugefügten Fenster (20) und der zweiten Schicht (22) vorgesehen ist.

7. Fensteranordnung (1) nach einem der Ansprüche 4-6, wobei die Funktionsschicht (40) eine PDLC-Schicht (240) ist, die an beiden lateralen Seiten mit Elektroden (241, 242) zum Ausüben eines elektrischen Felds über die PDLC-Schicht (240) versehen ist, wobei das elektrische Feld geeignet ist, um eine optische Durchlässigkeit der PDLC-Schicht (240) zwischen transparent und opak zu verschieben.

8. Fensteranordnung (1) nach einem der vorherigen Ansprüche, wobei die Spannungsquelle (2) in einem Rahmen (15) des ersten Fensters (10) oder in einem Rahmen (26) des hinzugefügten Fensters (20) vorgesehen ist.

9. Fensteranordnung (1) nach einem der vorherigen Ansprüche, wobei die Lamellen (30) geeignet sind, um sichtbares Licht, Infrarotstrahlung und/oder Ultraviolettstrahlung vollständig oder teilweise zu blockieren, zu reflektieren oder umzuwandeln.

10. Hinzufügbare Fensteranordnung (25), die ein hinzufügbares Fenster (20) und eine zweite Schicht (22) umfasst, die zur Anwendung in der Fensteranordnung (1) nach einem der Ansprüche 1-9 geeignet ist, wobei die zweite Schicht (22) leitfähig ist und an dem hinzufügbaren Fenster (20) haftet und wobei das hinzufügbare Fenster (20) Lamellen (30) umfasst, die leitfähig sind und zwischen einer ersten Position (I), in der sich die Lamellen (30) im Wesentlichen parallel zu dem hinzufügbaren Fenster (20) erstrecken, und einer zweiten Position (II) beweglich sind, in der die Lamellen im Wesentlichen senkrecht zu dem hinzufügbaren Fenster (20) ausgerichtet sind,
**gekennzeichnet dadurch, dass** das hinzufügbare Fenster (20) lösbar mit dem ersten Fenster (10) verbunden werden kann und/oder dadurch, dass das hinzufügbare Fenster (20) gelenkig mit dem ersten Fenster (10) verbunden werden kann.

11. Verwendung einer Anordnung von leitfähigen Lamellen (30), die mit einer klebenden zweiten Schicht (22) versehen sind, in der Fensteranordnung (1) nach einem der Ansprüche 1-9.

12. Verfahren zum Anbringen von Lamellen (30) an einem Fenster (10, 20), das die folgenden Schritte umfasst
- Bereitstellen eines ersten Fensters (10), das mit einer leitfähigen ersten Schicht (12) an einer ersten Seite (11) des ersten Fensters (10) versehen ist, und Bereitstellen eines hinzufügbaren Fensters (20), das mit einer leitfähigen zweiten Schicht (22) an einer ersten Seite (21) des hinzufügbaren Fensters (20) versehen ist,
wobei die erste Schicht (12) oder die zweite Schicht (22) mit Lamellen (30) versehen ist, die leitfähig sind und infolge einer Spannungsdifferenz zwischen einer ersten Position (I), in der sich die Lamellen (30) im Wesentlichen entlang einer Oberfläche (P) erstrecken, und einer zweiten Position (II) beweglich sind, wobei die Lamellen (30) im Wesentlichen senkrecht zu der Oberfläche (P) ausgerichtet sind, und zwischen der ersten Schicht (12) und der zweiten Schicht (22) positioniert sind;
- Platzieren des hinzufügbaren Fensters (20) parallel zu dem ersten Fenster (10), wobei die erste Seite (21) des hinzufügbaren Fensters (20) der ersten Seite (11) des ersten Fensters (10) zugewandt ist, wobei das hinzugefügte Fenster (20) lösbar mit dem ersten Fenster (10) verbunden ist und/oder wobei das hinzugefügte Fenster (20) gelenkig mit dem ersten Fenster (10) verbunden ist;
- Verbinden der ersten Schicht (12) und der zweiten Schicht (22) mit einer Spannungsquelle (4), um eine Spannungsdifferenz zwischen der ersten und der zweiten Schicht (12, 22) zu regulieren.

13. Verfahren zum Anbringen von Lamellen (30) an einem ersten Fenster (10) nach Anspruch 12, das ferner, vor den Schritten nach Anspruch 12, die folgenden Schritte umfasst:
- Bereitstellen des ersten Fensters (10);
- Aufbringen der ersten Schicht (12) auf die erste Seite (11) des ersten Fensters (10);
- Bereitstellen des hinzufügbaren Fensters (20);
- Aufbringen der zweiten Schicht (22) auf die erste Seite (21) des hinzufügbaren Fensters (20).

14. Verfahren zum Ersetzen von Lamellen (30) in einer Fensteranordnung (1) nach einem der Ansprüche 1-9, das die folgenden Schritte umfasst:
- Freigeben und Entfernen des hinzugefügten Fensters (20);
- Entfernen der ersten oder zweiten Schicht (12, 22), je nachdem, welche mit den Lamellen (30) versehen ist;
- Aufbringen einer neuen ersten Schicht auf das erste Fenster (10) oder einer neuen zweiten Schicht auf das hinzugefügte Fenster (20), wobei die neue erste Schicht oder die neue zweite Schicht Lamellen (30) umfasst;
- Ersetzen des hinzugefügten Fensters (20) an seiner ursprünglichen Position.

## Revendications

1. Ensemble de fenêtre (1) à lames (30), comprenant
- une première fenêtre (10), définissant une surface (P) ;
- une première couche (12), conductrice et adhérée à un premier côté (11) de la première fenêtre (10) ;
- une fenêtre ajoutée (20), connectée à la première fenêtre (10) au premier côté (11), s'étendant parallèle à la première fenêtre (10) ;
où une deuxième couche (22) est adhérée à la fenêtre ajoutée (20), la deuxième couche étant conductrice et adhérée à un premier côté (21) de la fenêtre ajoutée (20) qui fait face à la première couche (12) ;
et où soit la première couche (12) soit la deuxième couche (22) comprend lesdites lames (30) qui sont conductrices et mobiles entre une première position (I) dans laquelle les lames (30) s'étendent substantiellement parallèles à la surface (P), et une deuxième position (II) dans laquelle les lames (30) sont orientées substantiellement perpendiculaires à la surface (P), et sont positionnées entre la première couche (12) et la deuxième couche (22) ;
et où la première couche (12) et la deuxième couche (22) sont connectables à une source de tension (4) pour appliquer une différence de tension entre la première couche (21) et la deuxième couche (22), de sorte que les lames (30) soient mobiles ; et
où la fenêtre ajoutée (20) est connectée de manière amovible à la première fenêtre (10) et/ou où la fenêtre ajoutée (20) est connectée de manière articulée à la première fenêtre (10).

2. Ensemble de fenêtre (1) selon la revendication 1, où la différence de tension est variable.

3. Ensemble de fenêtre (1) selon la revendication 1, ou 2, où la première couche (12) ou la deuxième couche (22), selon celle qui est opposée aux lames (30), est pourvue d'une sous-couche isolante (13) couvrant une surface faisant face aux lames (30).

4. Ensemble de fenêtre (1) selon l'une quelconque des revendications précédentes, comprenant en outre une couche fonctionnelle (40), par exemple une couche PDLC ou une couche ferroélectrique.

5. Ensemble de fenêtre (1) selon la revendication 4, où la couche fonctionnelle (40) est placée entre la première fenêtre (10) et la première couche (12), et où l'ensemble de fenêtre (1) est en outre pourvu d'une couche fonctionnelle supplémentaire (50), par exemple une couche PDLC ou une couche ferroélectrique, où la couche fonctionnelle supplémentaire est placée entre la fenêtre ajoutée (20) et la deuxième couche (22).

6. Ensemble de fenêtre (1) selon la revendication 4, où la couche fonctionnelle (40) est placée entre la première fenêtre (10) et la première couche (12) ou entre la fenêtre ajoutée (20) et la deuxième couche (22).

7. Ensemble de fenêtre (1) selon l'une quelconque des revendications 4-6, où la couche fonctionnelle (40) est une couche PDLC (240), qui est pourvue d'électrodes des deux côtés latéraux (241, 242) pour exercer un champ électrique à travers la couche PDLC (240), où le champ électrique est adapté pour changer une transmission optique de la couche PDLC (240) entre transparente et opaque.

8. Ensemble de fenêtre (1) selon l'une quelconque des revendications précédentes, où la source de tension (2) est pourvue dans un cadre (15) de la première fenêtre (10) ou dans un cadre (26) de la fenêtre ajoutée (20).

9. Ensemble de fenêtre (1) selon l'une quelconque des revendications précédentes, où les lames (30) sont adaptées pour bloquer, réfléchir ou convertir totalement ou partiellement au moins l'un parmi la lumière visible, le rayonnement infrarouge et le rayonnement ultraviolet.

10. Ensemble de fenêtre ajoutable (25), comprenant une fenêtre ajoutable (20) et une deuxième couche (22), adapté pour l'application dans l'ensemble de fenêtre (1) selon l'une quelconque des revendications 1 à 9, où la deuxième couche (22) est conductrice et adhérée à la fenêtre ajoutable (20), et où la fenêtre ajoutable (20) comprend des lames (30) qui sont conductrices et mobiles entre une première position (I) dans laquelle les lames (30) s'étendent substantiellement parallèles à la fenêtre ajoutable (20), et une deuxième position (II) dans laquelle les lames sont orientées substantiellement perpendiculaires à la fenêtre ajoutable (20),
**caractérisé en ce que** la fenêtre ajoutable (20) est connectable de manière amovible à la première fenêtre (10) et/ou **en ce que** la fenêtre ajoutable (20) est connectable manière articulée à la première fenêtre (10).

11. Utilisation d'un ensemble de lames conductrices (30) pourvues d'une deuxième couche adhésive (22), dans l'ensemble de fenêtre (1) selon l'une quelconque des revendications 1 à 9.

12. Procédé pour appliquer des lames (30) à une fenêtre (10,20), comprenant les étapes de
- fournir une première fenêtre (10) pourvue d'une première couche conductrice (12) à un premier côté (11) de la première fenêtre (10), et fournir une fenêtre ajoutable (20) pourvue d'une deuxième couche conductrice (22) à un premier côté (21) de la fenêtre ajoutable (20),
où la première couche (12) ou la deuxième couche (22) est pourvue de lames (30) qui sont conductrices et sont, en conséquence d'une différence de tension, mobiles entre une première position (I) où les lames (30) s'étendent substantiellement le long d'une surface (P), et une deuxième position (II) où les lames (30) sont orientées substantiellement perpendiculaires à la surface (P), et sont positionnées entre la première couche (12) et la deuxième couche (22) ;
- placer la fenêtre ajoutable (20) parallèle à la première fenêtre (10), où le premier côté (21) de la fenêtre ajoutable (20) fait face au premier côté (11) de la première fenêtre (10), où la fenêtre ajoutée (20) est connectée de manière amovible à la première fenêtre (10) et/ou où la fenêtre ajoutée (20) est connectée de manière articulée à la première fenêtre (10) ;
- connecter la première couche (12) et la deuxième couche (22) à une source de tension (4) pour réguler une différence de tension entre la première et la deuxième couche (12,22).

13. Procédé pour appliquer des lames (30) à une première fenêtre (10) selon la revendication 12, comprenant en outre, préalablement aux étapes selon la revendication 12, les étapes suivantes :
- fournir la première fenêtre (10) ;
- appliquer la première couche (12) au premier côté (11) de la première fenêtre (10) ;
- fournir la fenêtre ajoutable (20) ;
- appliquer la deuxième couche (22) au premier côté (21) de la fenêtre ajoutable (20).

14. Procédé pour remplacer des lames (30) dans un ensemble de fenêtre (1) selon l'une quelconque des revendications 1-9, comprenant les étapes de :
- libérer et enlever la fenêtre ajoutée (20) ;
- enlever la première ou la deuxième couche (12,22), celle qui est fournie avec les lames (30) ;
- appliquer une nouvelle première couche à la première fenêtre (10) ou une nouvelle deuxième couche à la fenêtre ajoutée (20), où la nouvelle première couche ou la nouvelle deuxième couche comprend des lames (30) ;
- replacer la fenêtre ajoutée (20) dans sa position originale.
